# EUROPÄISCHE PATENTANMELDUNG

(11) **EP 2 339 730 A1**
(43) Veröffentlichungstag der Anmeldung: **29.06.2011**
(21) Anmeldenummer: 09180557.2
(22) Anmeldetag: 23.12.2009
(51) Int. Cl.: H02M 3/22, H02M 3/335

(54) **Erdungsfähiger DC/DC-Wandler**

(71) Anmelder: SMA Solar Technology AG, 34266 Niestetal (DE)
(72) Erfinder: Rigbers, Klaus, 34121 Kassel (DE); Althof, Carsten, 32105 Bad Salzuflen (DE); Papenfuß, Frank, 34329 Nieste (DE)
(74) Vertreter: Rehberg, Bernhard Frank

(57) **Zusammenfassung**

Bei einem DC/DC-Wandler (1) mit zwei Eingangsanschlüssen (2, 3), an die eine Eingangsgleichspannung (U_{E}) anzulegen ist, mit zwei Ausgangsanschlüssen (4, 5), an denen eine Ausgangsgleichspannung (U_{A}) ausgegeben wird, mit einem Wechselrichter (7), der eine Gleichspannung in eine Wechselspannung an seinem Ausgang (8) umwandelt, und mit einem Gleichrichter (10), der eingangsseitig an den Ausgang (8) des Wechselrichters (7) angeschlossen und ausgangsseitig zwischen einen der Eingangsanschlüsse (3) und einen der Ausgangsanschlüsse (5) geschaltet ist und der eine an seinem Eingang (9) anliegende Wechselspannung in eine Gleichspannung zwischen dem einen der Eingangsanschlüsse (3) und dem einen der Ausgangsanschlüsse (5) umwandelt, wobei zwischen dem Ausgang (8) des Wechselrichters (7) und dem Eingang (9) des Gleichrichters (10) mindestens ein galvanisch trennendes Element angeordnet ist und wobei zwischen den beiden Ausgangsanschlüssen (4, 5) eine Kapazität (11 + 14) wirksam ist, wandelt der Wechselrichter (7) die Gleichspannung um, die über einer Kapazität (6) abfällt, welche zwischen den jeweils anderen der Eingangsanschlüsse (2) und den jeweils anderen der Ausgangsanschlüsse (4) geschaltet ist.

## Beschreibung

### TECHNISCHES GEBIET DER ERFINDUNG

Die Erfindung betrifft einen DC/DC-Wandler mit den Merkmalen des Oberbegriffs des unabhängigen Patentanspruchs 1.

Ein solcher DC/DC-Wandler kann als Teil einer Vorrichtung zur Einspeisung elektrischer Energie von einer Photovoltaikanlage vorgesehen sein. Dabei kann dem DC/DC-Wandler ein Wechselrichter nachgeschaltet sein, der die elektrische Energie von der Photovoltaikanlage in ein Wechselstromnetz einspeist. Die vorliegende Erfindung ist aber nicht auf DC/DC-Wandler für diese spezielle Anwendung beschränkt.

### STAND DER TECHNIK

DC/DC-Wandler können unter anderem dazu eingesetzt werden, eine Eingangsgleichspannung in eine größere Ausgangsgleichspannung umzuwandeln und/oder um aus einer unipolaren Eingangsspannung eine bipolare Ausgangsspannung zu machen.

Bei einem aus Yi-Cherng Lin; Der-Cherng Liaw: Parametric study of a resonant switched capacitor DC-DC converter, Electrical and Electronic Technology, 2001. TENCON. Proceedings of IEEE Region 10 International Conference, Volume 2, 2001 Seiten 710-716 bekannten DC/DC-Wandler mit den Merkmalen des Oberbegriffs des unabhängigen Patentanspruchs 1 wandelt eine Wechselrichterhalbbrücke die zwischen den Eingangsanschlüssen anliegende Eingangsgleichspannung in eine Wechselspannung um, die von einer Gleichrichterbrücke aus zwei Dioden in eine Gleichspannung zurückgewandelt wird, welche zwischen einem der Eingangsanschlüsse und einem der Ausgangsanschlüsse anliegt und so die Ausgangsgleichspannung gegenüber der Eingangsgleichspannung erhöht. Dabei ist zwischen dem Ausgang der Wechselrichterhalbbrücke und dem Eingang der Gleichrichterbrücke ein Resonanzkreis ausgebildet, der eine die Gleichrichterhalbbrücke von der Wechselrichterbrücke kapazitiv entkoppelnde Kapazität und eine Induktivität und eine hierdurch definierte Resonanzfrequenz aufweist. Mit dieser Resonanzfrequenz werden die Schalter der Wechselrichterbrücke sinnvollerweise gegenphasig getaktet um einen möglichst verlustarmen Betrieb des DC/DC-Wandlers zu realisieren. Für den verlustarmen Betrieb erweist sich auch als vorteilhaft, dass bei diesem bekannten DC/DC-Wandler nur die Hälfte der elektrischen Energie über die Wechselrichterbrücke, den Resonanzkreis und die Gleichrichterbrücke geführt wird, um die gewünschte Verdopplung der Ausgangsgleichspannung gegenüber der Eingangsgleichspannung zu realisieren. Dabei bleibt jedoch das Bezugspotential der Eingangsgleichspannung erhalten, indem der jeweils andere der Ausgangsanschlüsse dasselbe Potential aufweist wie der jeweils andere der Eingangsanschlüsse, zwischen denen die Gleichrichterbrücke die Spannung nicht erhöht. Zudem ist eine Spannungsverdopplung, wie sie der bekannte DC/DC-Wandler leistet, zum Beispiel angesichts der sehr hohen Spannungen, die von aktuellen Photovoltaikanlagen bereitgestellt werden, um die Strombelastung von Leistungsstrom führenden Leitungen zu reduzieren, nicht immer von Interesse.

Aus der EP 1 971 018 A1 ist ein DC/DC-Wandler am Eingang eines Wechselrichters bekannt, bei dem zwei in Reihe geschaltete und an ihrem Mittelpunkt geerdete Kondensatoren mit gleichsinniger Polarität geregelt aufgeladen werden. Dazu ist ein Hochsetzsteller vorgesehen, der den Eingangsanschlüssen parallel nachgeschaltet ist und einen der beiden Kondensatoren lädt. Weiter ist ein invertierender Tief-Hochsetzsteller vorgesehen, der den Eingangsanschlüssen parallel nachgeschaltet ist und den anderen Kondensator lädt. Die über den beiden Kondensatoren abfallende Ausgangsgleichspannung weist dabei eine Grundübersetzung von zwei gegenüber der Eingangsgleichspannung zwischen den Eingangsanschlüssen auf. Diese Spannungserhöhung ist, wie bereits angesprochen wurde, nicht immer von Interesse. Günstig ist jedoch, dass dieser bekannte DC/DC-Wandler eine unipolare Eingangsgleichspannung in eine bipolare Ausgangsgleichspannung umwandelt. So kann einer der Eingangsanschlüsse, der mit dem Mittelpunkt der beiden Kondensatoren verbunden ist, geerdet werden, um je nach Wunsch im Bereich einer angeschlossenen Photovoltaikanlage negative oder positive Spannung gegenüber Erde zu vermeiden. Ein weiterer Nachteil dieses bekannten DC/DC-Wandlers ist jedoch, dass der invertierende Tief-Hochsetzsteller nur dann die Invertierung leistet, wenn sein Schalter tatsächlich getaktet wird. Tief- und Hochsetzsteller weisen jedoch ihren optimalen Wirkungsgrad grundsätzlich dann auf, wenn ihre Schalter möglichst wenig betätigt werden.

### AUFGABE DER ERFINDUNG

Der Erfindung liegt die Aufgabe zugrunde, einen DC/DC-Wandler mit den Merkmalen des Oberbegriffs des Patentanspruchs 1 aufzuzeigen, der mit minimalem apparativem Aufwand und minimalen Leistungsverlusten in der Lage ist, eine unipolare Eingangsgleichspannung in eine bipolare Ausgangsgleichspannung umzuwandeln, ohne die Gleichspannung dabei zwangsweise zu erhöhen.

### LÖSUNG

Erfindungsgemäß wird diese Aufgabe durch einen DC/DC-Wandler mit den Merkmalen des unabhängigen Patentanspruchs 1 gelöst. Bevorzugte Ausführungsformen des neuen DC/DC-Wandler sind in den abhängigen Patentansprüchen 2 bis 15 definiert.

### BESCHREIBUNG DER ERFINDUNG

Soweit in der folgenden Beschreibung der Begriff Wechselrichter verwendet wird, so schließt dieser Begriff, insofern nichts anderes angegeben ist, alles ein, was der Fachmann hierunter versteht. Insbesondere, aber nicht ausschließlich deckt der Begriff Wechselrichter somit Wechselrichter mit einer Wechselrichterbrücke zwischen zwei Eingangsleitungen ab, die mindestens eine aus aktiv geschalteten Schaltern aufgebaute Halbbrücke aufweist.

Soweit in der folgenden Beschreibung der Begriff Gleichrichter verwendet wird, so schließt dieser Begriff, insofern nichts anderes angegeben ist, alles ein, was der Fachmann hierunter versteht. Insbesondere, aber nicht ausschließlich deckt der Begriff Gleichrichter somit Gleichrichter mit einer zu zwei Ausgangsleitungen verzweigenden Gleichrichterbrücke ab, die mindestens eine aus gleichrichtenden Dioden aufgebaute Halbbrücke aufweist.

Dabei ist aber zu beachten, dass im Rahmen der vorliegenden Erfindung jede Diode als rein passiv schaltendes Element durch einen entsprechend aktiv geschalteten Schalter, auch durch einen entsprechend aktiv geschalteten Schalter mit inhärenter oder externer antiparalleler Diode, oder durch die inhärente Diode eines aktiv schaltbaren Halbleiterschalters ersetzt werden kann, ohne dass sich hierdurch eine grundsätzlich andere Funktion des DC/DC-Wandlers ergibt. Derartige Ersatzschaltungen für eine Diode sind dem Fachmann geläufig und werden daher in der folgenden Beschreibung durch den Begriff Diode mit abgedeckt.

Bei dem neuen DC/DC-Wandler wandelt der Wechselrichter nicht die gesamte Eingangsgleichspannung in die Wechselspannung an seinem Ausgang um, sondern nur eine Gleichspannung, die über einer Kapazität abfällt, welche zwischen dem jeweils anderen der Eingangsanschlüsse und den jeweils anderem der Ausgangsanschlüsse wirksam ist, zwischen denen die ausgangsseitige Gleichspannung des Gleichrichters nicht anliegt. Insbesondere ist diese Kapazität unmittelbar zwischen den jeweils anderen der Eingangsanschlüsse und den jeweils anderen der Ausgangsanschlüsse geschaltet. Durch die Parallelschaltung dieser Kapazität und des Wechselrichters zwischen den jeweils anderen der Eingangsanschlüsse und den jeweils anderen der Ausgangsanschlüsse wird das Potential an dem jeweils anderen der Ausgangsanschlüsse gegenüber dem jeweils anderen der Eingangsanschlüsse zu dem einen der Eingangsanschlüsse hin verschoben. Gleichzeitig wird das Potential des einen der Ausgangsanschlüsse gegenüber dem einen der Eingangsanschlüsse von dem anderen der Eingangsanschlüsse weg verschoben. So liegt die Ausgangsspannung auf beiden Seiten des Potentials des jeweils einen der Eingangsanschlüsse. Wenn dieser eine der Eingangsanschlüsse aus welchen Gründen auch immer geerdet wird, wird aus einer unipolaren Eingangsgleichspannung eine bipolare Ausgangsgleichspannung. Trotz des unterschiedlichen Potential bezugs bleibt die Größe der Ausgangsgleichspannung bei dem erfindungsgemäßen DC/DC-Wandler gegenüber der Eingangsgleichspannung grundsätzlich gleich.

Bei dem neuen DC/DC-Wandler kann auch dem Gleichrichter ausgangsseitig eine Kapazität zwischen dem einen der Eingangsanschlüsse und dem einen der Ausgangsanschlüsse parallel geschaltet sein.

Die dem Ausgang des Gleichrichters zwischen dem einen der Eingangsanschlüsse und dem einen der Ausgangsanschlüsse parallel geschaltete Kapazität kann einen Teil der zwischen den Ausgangsanschlüssen wirksamen Kapazität des neuen DC/DC-Wandlers ausbilden, indem zwischen den anderen der Ausgangsanschlüsse und dem einen der Eingangsanschlüsse eine weitere Kapazität mit dieser Kapazität in Reihe geschaltet wird. Bei dem neuen DC/DC-Wandler ist eine Vielzahl von unterschiedlichen Anordnungen einzelner Kapazitäten möglich.

So kann eine Kapazität, die dem Gleichrichter ausgangsseitig zwischen dem einen der Eingangsanschlüsse und dem einen der Ausgangsanschlüsse parallel geschaltet ist, in zwei Teilkapazitäten aufgeteilt sein, wobei der Mittelpunkt der beiden Teilkapazitäten über ein Induktivität mit dem Eingang des Gleichrichters verbunden sein kann. Diese Induktivität kann dem Zweck des Schaltens von Schaltern des Wechselrichters bei einer Spannung von null oder zumindest nahe null dienen (Zero Voltage Switching (ZVS)). Eine solche Induktivität kann ganz grundsätzlich bei dem neuen DC/DC-Wandler in Reihe mit einer Kapazität zwischen jeden der Wechselrichterausgänge oder Gleichrichtereingänge und einen der Eingangsanschlüsse oder Ausgangsanschlüsse geschaltet sein.

Die Verbindung des Ausgangs des Wechselrichters mit dem Eingang des Gleichrichters erfolgt vorzugsweise über einen Resonanzkreis. Dieser Resonanzkreis kann eine Kapazität und eine Induktivität umfassen. Alternativ kann die Kopplung zwischen dem Wechselrichter und dem Gleichrichter über einen Transformator erfolgen, dem eine Kapazität in Reihe geschaltet werden kann, um mit der Streuinduktivität des Transformators einen Resonanzkreis zu bilden. Zur Vermeidung des Einflusses hoher Toleranzen der Streuinduktivität kann der Kapazität eine Induktivität in Reihe geschaltet werden. Bei einem Resonanzkreis zwischen dem Wechselrichter und dem Gleichrichter, erfolgt die Ansteuerung der Schalter des Wechselrichters vorzugsweise mit einem Tastgrad nahe 50 % und mit einer Frequenz nahe der Resonanzfrequenz. Die Schaltzustände des DC-DC Wandlers sind dabei unabhängig von den Schaltzuständen eines dem neuen DC/DC-Wandler etwaig nachgeschalteten Wechselrichters. Dem Gleichrichter können Schalter parallelgeschaltet werden, um einen bidirektionalen Leistungsfluss zu ermöglichen und/oder um die Gleichrichterverluste zu reduzieren.

Zwischen dem Ausgang des Wechselrichters und dem Eingang des Gleichrichters können auch mehrere Resonanzkreise ausgebildet sein, zum Beispiel einer je Halbbrücke des Wechselrichters. Diese verschiedenen Resonanzkreise weisen dann vorzugsweise alle dieselbe Resonanzfrequenz auf und werden gegeneinander versetzt getaktet. Wenn sie jeweils zu einer Halbbrücke des Gleichrichters führen, können sie z. B. am Eingang des Gleichrichters induktiv gekoppelt sein.

Damit der neue DC/DC-Wandler einen hohen Wirkungsgrad aufweist, ist die Dämpfung zwischen dem Wechselrichter und dem Gleichrichter möglichst gering. Dies hat zur Folge, dass dann, wenn die parallel zum Eingang des Wechselrichters liegende Kapazität bereits aufgeladen ist, während die parallel zum Ausgang des Gleichrichters liegende Kapazität noch nicht aufgeladen ist, beim erstmaligen Takten der Schalter des Wechselrichters sehr hohe Ströme fließen würden. Zudem müssten die Schalter des Wechselrichters dann bei hoher anliegender Spannung geschaltet werden, was ungünstig ist. Um beides zu vermeiden, ist bei dem neuen DC/DC-Wandler der Kapazität, die zwischen den jeweils anderen der Eingangsanschlüsse und den jeweils anderen der Ausgangsanschlüsse geschaltet ist, zusätzlich zu dem Eingang des Wechselrichters vorzugsweise eine Schaltung parallel geschaltet, mit der die über der Kapazität abfallende Spannung reduzierbar ist. Im einfachsten Fall handelt es sich dabei um einen Schalter, der die Kapazität über einen Widerstand kurzschließt. Besonders bevorzugt ist dieser Schalter ein selbstleitender Schalter, der erst dann geöffnet wird, wenn die Schalter des Wechselrichters bereits getaktet werden, so dass diese zunächst bei einer Spannung von null schalten, weil noch keine Spannung über der Kapazität aufgebaut ist. Auch wenn sich diese Spannung langsam aufbaut, bleibt das Schalten der Schalter des Wechselrichters bei einem Strom nahe null erhalten, wenn der Wechselrichter einen oder mehrere Resonanzkreise speist.

Die Schaltung, mit der die Spannung über der Kapazität, die zwischen den jeweils anderen Eingangsanschluss und den jeweils anderen Ausgangsanschluss geschaltet ist, reduzierbar ist, kann zudem die zwischen dem einen der Eingangsanschlüsse und dem anderen der Ausgangsanschlüsse abfallende Spannung gezielt verändern und so auf die Spannungsaufteilung in dem neuen DC/DC-Wandler überhaupt Einfluss nehmen. Dazu weist die Schaltung neben dem mindestens einen Schalter, eine Induktivität und mindestens eine Diode auf.

Konkret kann der Schalter der Schaltung so angesteuert werden, dass die Spannungen an beiden Eingangsanschlüsse gegenüber Erde dasselbe Vorzeichen aufweisen oder eine dieser Spannungen zumindest nahe null ist. Eine derartige Vorgabe der Eingangspotentiale des neuen DC/DC-Wandlers ist ohne die Schaltung durch Verbinden des einen der Eingangsanschlüsse mit Erde bzw. einem Neutralleiter oder einem z.B. mit Hilfe eines Spannungsteilers definierten Potential zu erreichen. Dieses Verbinden erfolgt vorzugsweise über einen Widerstand und/oder eine Induktivität und ein Relais, mit dem die Verbindung bei Bedarf trennbar ist. Ein Grund, für beide Eingangsanschlüsse ein positives Potential vorzugeben, kann darin liegen, negative Potentiale im Bereich einer an den DC/DC-Wandler eingangsseitig angeschlossenen Photovoltaikanlage grundsätzlich zu vermeiden, da solche negativen Potentiale für bestimmte Solarzellen nachteilig sind. In anderen Fällen mag es bevorzugt sein, positive Potentiale auf der Eingangsseite des DC/DC-Wandlers zu vermeiden.

Die Ansteuerung der Schalter der Schaltung kann alternativ in Abhängigkeit eines Signals eines Sensors erfolgen, der einen Erdstrom z. B. in Form eines Ableitstrom über die Ausgangsanschlüsse des neuen DC/DC-Wandlers erfasst. Dabei kann diese Erfassung unmittelbar am Ausgang des DC/DC-Wandlers, aber auch am Ausgang eines dem DC/DC-Wandlers nachgeschalteten Wechselrichters erfolgen. Der Sensor kann ein bekannter Stromsensor sein, der auf die Stromsumme über die überwachten Leitungen anspricht. Die Ansteuerung der Schalter der Anlaufsteuerung erfolgt mit dem Ziel, den Ableitstrom möglichst auf null zu reduzieren. Besonders bevorzugt ist die Anwendung einer entsprechenden Regelung des Erdstroms, welche auf den Tastgrad der Schalter der Anlaufschaltung einwirkt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Die Erfindung wird im Folgenden anhand verschiedener Ausführungsbeispiele unter Bezugnahme auf die beigefügten Zeichnungen näher erläutert und beschrieben.
- **Fig. 1**: zeigt schematisch den Aufbau einer ersten Ausführungsform des neuen DC/DC-Wandlers.
- **Fig. 2**: zeigt schematisch den Aufbau einer zweiten Ausführungsform des neuen DC/DC-Wandlers mit anderer Kapazitätsanordnung als in Fig. 1.
- **Fig. 3**: zeigt eine konkretere Ausgestaltung des DC/DC-Wandlers gemäß Fig. 1.
- **Fig. 4**: zeigt eine konkretere Ausgestaltung des DC/DC-Wandlers gemäß Fig. 2.
- **Fig. 5**: skizziert eine Möglichkeit der Realisierung einer als Anlaufschaltung dienenden Schaltung des DC/DC-Wandlers gemäß Fig. 3 oder 4.
- **Fig. 6**: skizziert eine weitere Möglichkeit der Realisierung der als Anlaufschaltung dienenden Schaltung.
- **Fig. 7**: skizziert noch eine weitere Möglichkeit der Realisierung der als Anlaufschaltung dienenden Schaltung.
- **Fig. 8**: skizziert noch eine weitere Möglichkeit der Realisierung der als Anlaufschaltung dienenden Schaltung.
- **Fig. 9**: zeigt eine Abwandlung des DC/DC-Schalters gemäß Fig. 3.
- **Fig. 10**: skizziert schematisch eine weitere Ausführungsform des neuen DC/DC-Schalters.
- **Fig. 11**: skizziert schematisch noch eine weitere Ausführungsform des neuen DC/DC-Wandlers mit gegenüber Fig. 10 geänderter Kapazitätsanordnung.
- **Fig. 12**: skizziert eine Ausführungsform des neuen DC/DC-Wandlers mit Transformator.
- **Fig. 13**: zeigt eine konkretere Ausgestaltung des DC/DC-Wandlers gemäß Fig. 10.
- **Fig. 14**: zeigt eine konkretere Ausgestaltung des DC/DC-Wandlers gemäß Fig. 11.
- **Fig. 15**: zeigt eine erste konkrete Ausgestaltung des DC/DC-Wandlers gemäß Fig. 12.
- **Fig. 16**: zeigt eine zweite konkrete Ausgestaltung des DC/DC-Wandlers gemäß Fig. 12.
- **Fig. 17**: skizziert eine Möglichkeit der Berücksichtigung eines Signals eines Summenstromwandlers in der als Anlaufschaltung dienenden Schaltung bei einer weiteren konkreteren Ausgestaltung des DC/DC-Wandlers gemäß Fig. 1.
- **Fig. 18**: skizziert eine weitere Möglichkeit der Berücksichtigung eines Signals eines Summenstromwandlers in der als Anlaufschaltung dienenden Schaltung bei dem DC/DC-Wandler gemäß Fig. 3.
- **Fig. 19**: skizziert einen Regelalgorithmus für eine Steuerlogik der als Anlaufschaltung dienenden Schaltung gemäß Fig. 17 oder Fig. 18.

### FIGURENBESCHREIBUNG

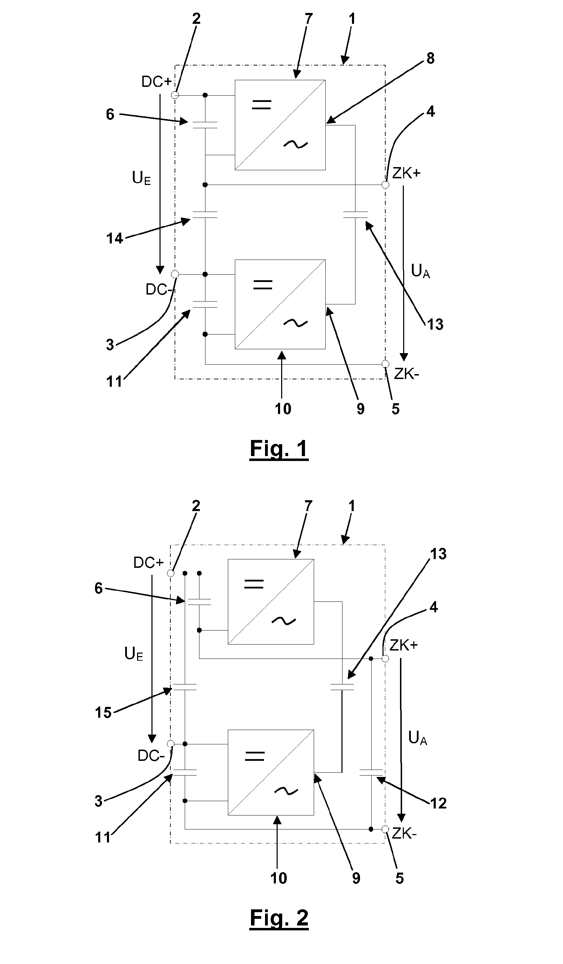

Der in **Fig. 1** skizzierte DC/DC-Wandler 1 weist zwei Eingangsanschlüsse 2 und 3 und zwei Ausgangsanschlüsse 4 und 5 auf. Die Eingangsanschlüsse 2 und 3 sind zum Anlegen einer Eingangsgleichspannung U_{E} vorgesehen, wobei hier an dem Eingangsanschluss 2 der Pluspol mit einem Potential DC+ und an dem Eingangsanschluss 3 der Minuspol mit einem Potential DC- der Eingangsspannung U_{E} anliegt. An den Ausgangsanschlüssen 4 und 5 gibt der DC/DC-Wandler 1 eine Ausgangsgleichspannung U_{A} ab, wobei der Pluspol mit einem Potential ZK+ dieser Ausgangsgleichspannung U_{A} an dem Ausgangsanschluss 4 und der Minuspol mit einem Potential ZK- an dem Ausgangsanschluss 5 anliegt. Zwischen den Eingangsanschluss 2 und den Ausgangsanschluss 4 ist eine Kapazität 6 geschaltet. Die über dieser Kapazität 6 anfallende Gleichspannung wird von einem Wechselrichter 7 in eine Wechselspannung umgewandelt. Dabei ist der Ausgang 8 des Wechselrichters 7 unter Zwischenschaltung einer Koppelkapazität 13 an den Eingang 9 eines Gleichrichters 10 angeschlossen, der die Wechselspannung in eine Gleichspannung umwandelt, die zwischen dem Eingangsanschluss 3 und dem Ausgangsanschluss 5 anliegt, wobei dem Gleichrichter 10 zwischen dem Eingangsanschluss 3 und dem Ausgangsanschluss 5 eine Kapazität 11 parallel geschaltet ist. Zwischen den Eingangsanschluss und den Ausgangsanschluss 4 ist eine weitere Kapazität 14 geschaltet. Damit ist die Reihenschaltung der Kapazitäten 11 und 14 zwischen dem Ausgangsanschluss 5 und dem Ausgangsanschluss 4 wirksam. Die Funktionsweise des DC/DC-Wandlers 1 kann so erklärt werden, dass die Eingangsspannung U_{E} anteilig über den Kapazitäten 6 und 14 abfällt und der dabei von dem Potential DC- an dem Eingangsanschluss 3 weiter entfernt liegende Anteil mit Hilfe des Wechselrichters 7 und des Gleichrichters 10 auf die Kapazität 11 übertragen wird, so dass die Ausgangsspannung U_{A}, die über den Kapazitäten 11 und 14 abfällt, gegenüber der Eingangsspannung U_{E} eine Potentialverschiebung erfährt. So kann bei der Eingangsspannung U_{E} das Potential DC-, das an dem Eingangsanschluss 3 anliegt, mit Erde verbunden werden, so dass eine unipolare positive Eingangsgleichspannung U_{E} in eine bipolare Ausgangsgleichspannung U_{A} umgewandelt wird.

Diese Funktion erfüllt auch der in **Fig. 2** skizzierte DC/DC-Wandler 1, bei dem statt der Kapazität 14 gemäß Fig. 1 eine Kapazität 15 zwischen den Eingangsanschlüssen 2 und 3 und eine Kapazität 12 zwischen den Ausgangsanschlüssen 4 und 5 vorgesehen sind. Dabei kann eine dieser beiden Kapazitäten 12 und 15 auch weggelassen werden, weil in jedem Fall eine Kapazität zwischen den Ausgangsanschlüssen 4 und 5 wirksam bleibt. Wenn die Kapazität 12 weggelassen wird, setzt sich diese Kapazität zwischen den Ausgangsanschlüssen 4 und 5 aus Beiträgen zusammen, die durch die Kapazitäten 6, 11 und 15 bestimmt werden.

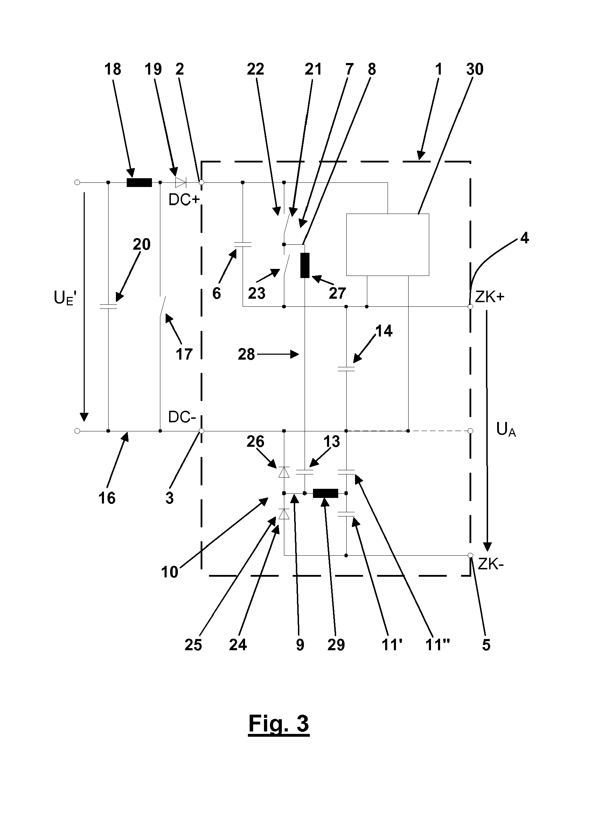

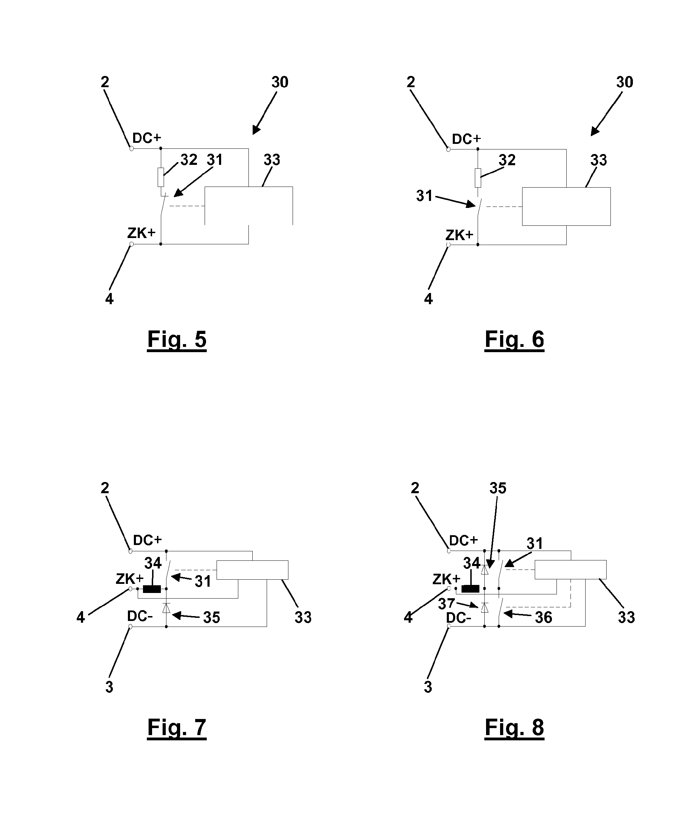

In **Fig. 3** sind Details des DC/DC-Wandlers 1 gemäß Fig. 1 gezeigt. Darüber hinaus ist dem DC/DC-Wandler 1 ein Hochsetzsteller 16 vorgeschaltet, der hier neben einem Schalter 17, einer Induktivität 18 und einer Diode 19 eine Pufferkapazität 20 umfasst und der eine Eingangsspannung U_{E}' nach Bedarf in die zwischen den Eingangsanschlüssen 2 und 3 des DC/DC-Wandlers 1 anliegende Eingangsspannung hochsetzt. Der Wechselrichter 7 ist als Halbbrücke 21 mit zwei gegenphasig getakteten Schaltern 22 und 23 ausgebildet. Der Gleichrichter 10 ist als Halbbrücke 24 aus zwei Dioden 25 und 26 aufgebaut. Weiter ist mit der Koppelkapazität 13, die den Ausgang 8 des Wechselrichters 7 von dem Eingang 9 des Gleichrichters 10 galvanisch trennt, eine Induktivität 27 in Reihe geschaltet, die zusammen mit der Koppelkapazität 13 einen Resonanzkreis 28 ausbildet, bei dessen Resonanzfrequenz die Schalter 22 und 23 getaktet werden. Die Kapazität 11, die parallel zu dem Gleichrichter 10 zwischen den Einganganschluss 3 und den Ausgangsanschluss 5 geschaltet ist, ist in zwei Teilkapazitäten 11' und 11" aufgeteilt, wobei zwischen den Mittelpunkt dieser Teilkapazitäten 11' und 11" und den Eingang 9 des Gleichrichters 10 eine Induktivität 29 geschaltet ist, die auf diese weise über die Teilkapazität 11' mit dem Ausgangsanschluss 5 verbunden ist und das Schalten der Schalter 22 und 23 des Wechselrichters 7 jeweils in den Nulldurchgängen der Spannung des Resonanzkreises 28 unterstützt. Weiterhin ist eine als Anlaufschaltung dienende Schaltung 30 angedeutet, die detaillierter in Zusammenhang mit den Fig. 5 bis 8 erläutert werden wird.

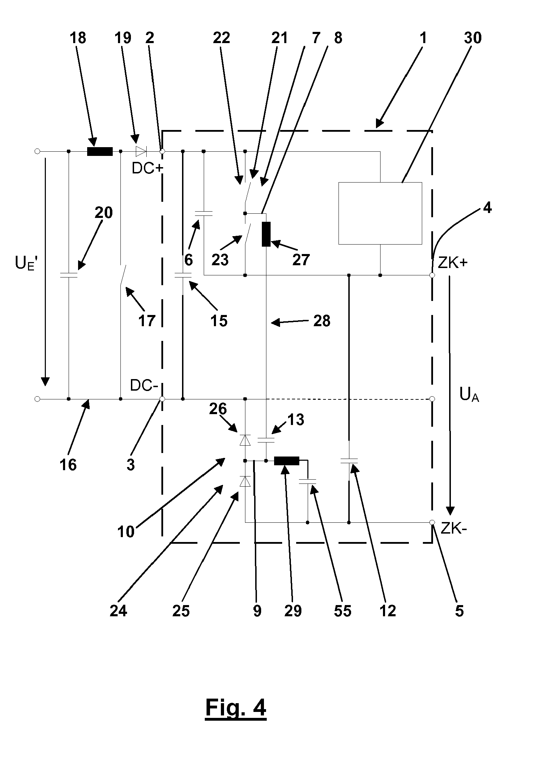

Der in **Fig. 4** skizzierte Schaltungsaufbau unterscheidet sich von demjenigen gemäß Fig. 3 dadurch, dass die Kapazität 14 weggelassen ist und dafür die Kapazitäten 12 und 15 zwischen die Ausgangsanschlüsse 4 und 5 bzw. die Eingangsanschlüsse 2 und 3 geschaltet sind (vgl. Fig. 3). Weiterhin ist die Kapazität 11 weggelassen und statt dessen die Induktivität 29 über eine Kapazität 55 mit dem Ausgangsanschluss 5 verbunden.

**Fig. 5** skizziert eine erste Ausführungsform der Schaltung 30 gemäß den Fig. 3 und 4, die hier anders als in Fig. 3 dargestellt nicht mit dem Potential DC- des Eingangsanschlusses 3 verbunden ist. Hier weist die Schaltung 30 einen selbstleitenden Schalter 31 auf, der mit einem Widerstand 32 in Reihe parallel zu der hier nicht dargestellten Kapazität 6 zwischen den Eingangsanschluss 4 und den Ausgangsanschluss 5 geschaltet ist. Solange eine Steuerlogik 33 den Schalter 31 nicht öffnet, schließt dieser die Kapazität 6 über den Widerstand 32 kurz. Das heißt, es kann sich keine Spannung über der Kapazität 6 aufbauen. So kann das Takten der Schalter 22 und 23 des Wechselrichters 7 spannungsfrei begonnen werden. Dies ist unmittelbar günstig für das Schalten der Schalter 22 und 23. Zudem wird der Stromfluss von dem Ausgang 8 des Wechselrichters 7 zu dem Eingang 9 des Gleichrichters 10 zu Beginn des Taktens der Schalter 22 und 23 in sinnvoller Weise klein gehalten. Weiterhin verhindert die Anlaufschaltung 30 auch den Fall, dass die gesamte Eingangsspannung U_{E} über die Kapazität 6 abfällt und nicht nur wie gewünscht ein Teil der Eingangsspannung U_{E}.

**Fig. 6** skizziert eine Variante der Schaltung 30 gemäß Fig. 5, bei der der Schalter 31 selbstsperrend und nicht selbstleitend ist und entsprechend von der Steuerlogik 33 zunächst aktiv geschlossen werden muss. Die grundsätzliche Funktionsweise der Schaltung 30 gemäß Fig. 6 als Anlaufschaltung entspricht dabei derjenigen gemäß Fig. 5.

Die in **Fig. 7** skizzierte Schaltung 30 weist zusätzlich eine Induktivität 34 und eine Diode 35, dafür keinen Widerstand 32 auf. Die Induktivität 34 ist mit dem Schalter 31 in Reihe zwischen den Eingangsanschluss 2 und den Ausgangsanschluss 4 geschaltet, während die Diode 35 in Reihe mit der Induktivität 34 zwischen den Eingangsanschluss 3 und den Ausgangsanschluss 4 geschaltet ist. Auf diese Weise ist ein Hochsetzsteller für das Ausgangspotential ZK+ ausgebildet, mit dem die Lage des Ausgangspotentials ZK+ zwischen den Potentialen (DC+ + DC-)/2 und DC+ eingestellt werden kann.

Bei der Schaltung 30 gemäß **Fig. 8** sind ein zusätzlicher Schalter 36 und eine zusätzliche Diode 37 vorgesehen, die es zusammen ermöglichen, das Ausgangspotential ZK+ an dem Ausgangsanschluss 4 zwischen den Eingangspotentialen DC- und DC+ einzustellen.

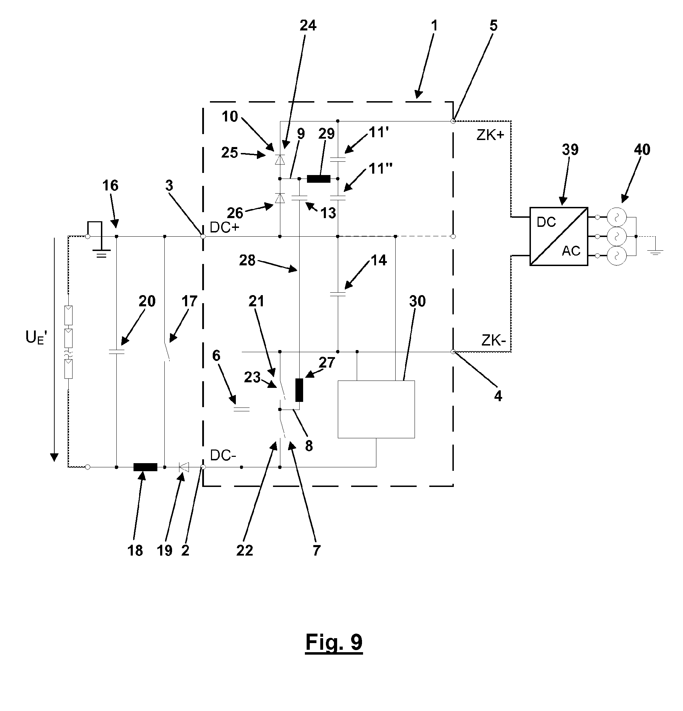

**Fig. 9** zeigt im Kern denselben Aufbau wie Fig. 3, außer dass hier die Polarität der Eingangsspannung U_{E} umgekehrt ist, das heißt, dass an dem Eingangsanschluss 2 das Potential DC- und an dem Eingangsanschluss 3 das Potential DC+ anliegt. Entsprechend liegt das Ausgangspotential ZK- an dem Ausgangsanschluss 4 und das Ausgangspotential ZK+ an dem Ausgangsanschluss 5 vor. In Verbindung mit einer Erdung des Eingangsanschlusses 3 wird verhindert, dass in einer Photovoltaikanlage 38, die die Eingangsspannung U_{E}' liefert, positive Spannungen gegenüber Erde auftreten, während die bisherigen Ausführungsformen bei entsprechender Erdung das Auftreten negativer Spannung gegenüber Erde auf der Eingangsseite verhinderten. Zudem ist in Fig. 9 der Anschluss eines Wechselrichters 39 an die Ausgangsanschlüsse 4 und 5 skizziert, wobei der Wechselrichter 39 über das Potential DC+ mit Erde verbunden ist und die elektrische Energie von der Photovoltaikanlage 38 in ein dreiphasiges Wechselstromnetz 40 mit Erdbezug einspeist.

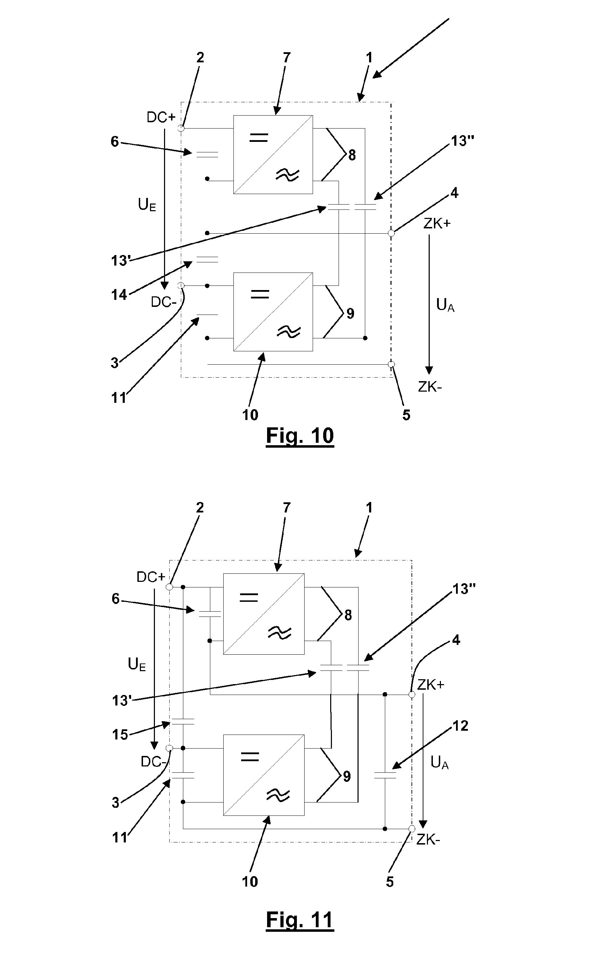

Bei dem Wechselrichter 1, der in **Fig. 10** skizziert ist, verlaufen zwischen dem Ausgang 8 des Wechselrichters 7 und dem Eingang 9 des Gleichrichters 10 zwei Leitungen, in denen jeweils eine, die galvanische Trennung bewirkende Kopplungskapazität 13' bzw. 13" angeordnet ist.

**Fig. 11** weist dieses Merkmal ebenfalls auf und unterscheidet sich von der Ausführungsform des DC/DC-Wandlers gemäß Fig. 10 nur durch eine Fig. 2 statt Fig. 1 entsprechende Kapazitätsanordnung.

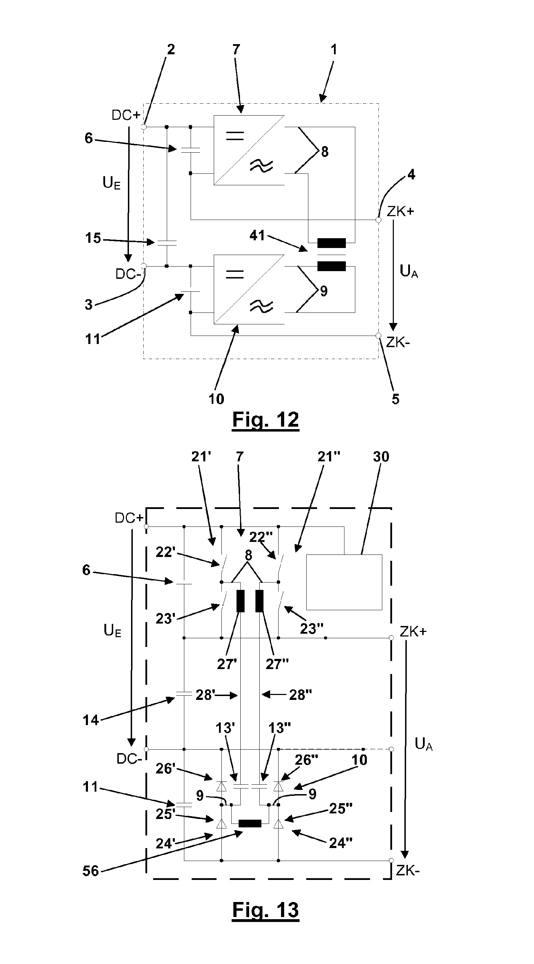

Demgegenüber skizziert **Fig. 12** bei der grundsätzlichen Kapazitätsanordnung gemäß Fig. 11, wobei jedoch die Kapazität 12 weggelassen ist, die galvanische Trennung des Ausgangs 8 des Wechselrichters 7 von dem Eingang 9 des Gleichrichters 10 mittels eines Transformators 41.

Die Realisation der grundsätzlichen Schaltung gemäß Fig. 10, die in **Fig. 13** dargestellt ist, umfasst die Ausbildung des Wechselrichters 7 als Vollbrücke mit zwei Halbbrücken 21' und 21" mit Schaltern 22' und 23' bzw. 22" und 23". Dabei speist jede Halbbrücke 21 einen Resonanzkreis 28' bzw. 28" mit einer Induktivität 27' bzw. 27" und einer der Kopplungskapazitäten 13' bzw. 13". Diese Resonanzkreise 28 sind jeweils an eine Halbbrücke 24' bzw. 24" des Gleichrichters 10 angeschlossen, die aus Dioden 25' und 26' bzw. 25" und 26" aufgebaut sind. Dabei sind die beiden Halbbrücken 24 eingangsseitig durch eine Induktivität 55 mit grundsätzlich derselben Funktion wie die Induktivität 29 gemäß Fig. 3 oder 4 gekoppelt. So werden die beiden Resonanzkreise 28' und 28" induktiv gekoppelt, um ihr gegenphasiges Schwingen aufgrund der paarweise gegenphasig getakteten Schalter 22' und 23" sowie 22" und 23' zu stabilisieren.

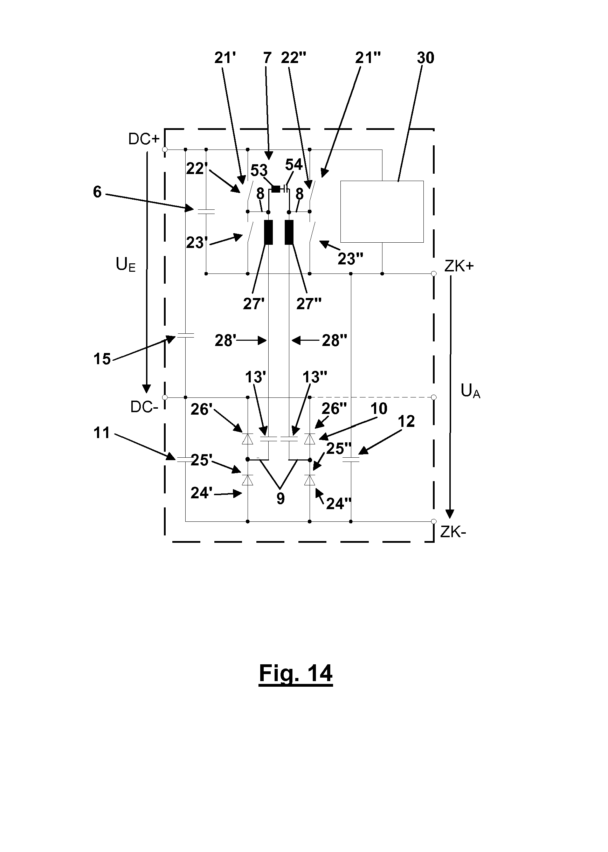

Der Aufbau des DC/DC-Wandlers 1 gemäß **Fig. 14** entspricht bis auf die Kapazitätsanordnung und die Schaltung einer Induktivität 53 in Reihe mit einer Kapazität 54 direkt zwischen die Wechselrichterausgänge statt der Induktivität 56 dem DC/DC-Wandlers 1 gemäß Fig. 13. (Bei dem DC/DC-Wandlers 1 gemäß Fig. 13 sind die Kopplungskapazitäten 13' und 13" als Kapazität zwischen den Wechselrichterausgängen wirksam.)

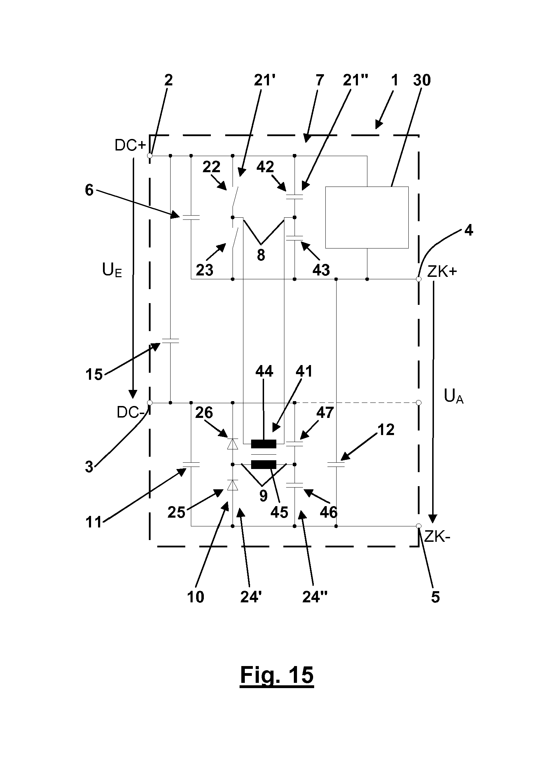

In der Ausführungsform des DC/DC-Wandlers 1 gemäß **Fig. 15** ist der Gleichrichter 7 aus einer Halbbrücke 21' mit zwei Schaltern 22 und 23 und einer Halbbrücke 21" mit zwei Kapazitäten 42 und 43 ausgebildet. Diese Kapazitäten 42 und 43 bilden zusammen mit der Primärwicklung 44 des Transformators 41 einen Resonanzkreis, der von dem Wechselrichter 7 gespeist wird. Die Sekundärwicklung 45 des Transformators 41 speist den Gleichrichter 10, der hier eine Halbbrücke 24 aus den Dioden 25 und 26 und eine Halbbrücke 24" aus Kapazitäten 46 und 47 aufweist. Dabei sind die Kapazitäten 11 und 12 angesichts der Kapazitäten 46 und 47 und der Kapazität 15 hier nicht notwendig. Alternativ zu der Kapazität 12 könnte auch auf die Kapazität 15 verzichtet werden.

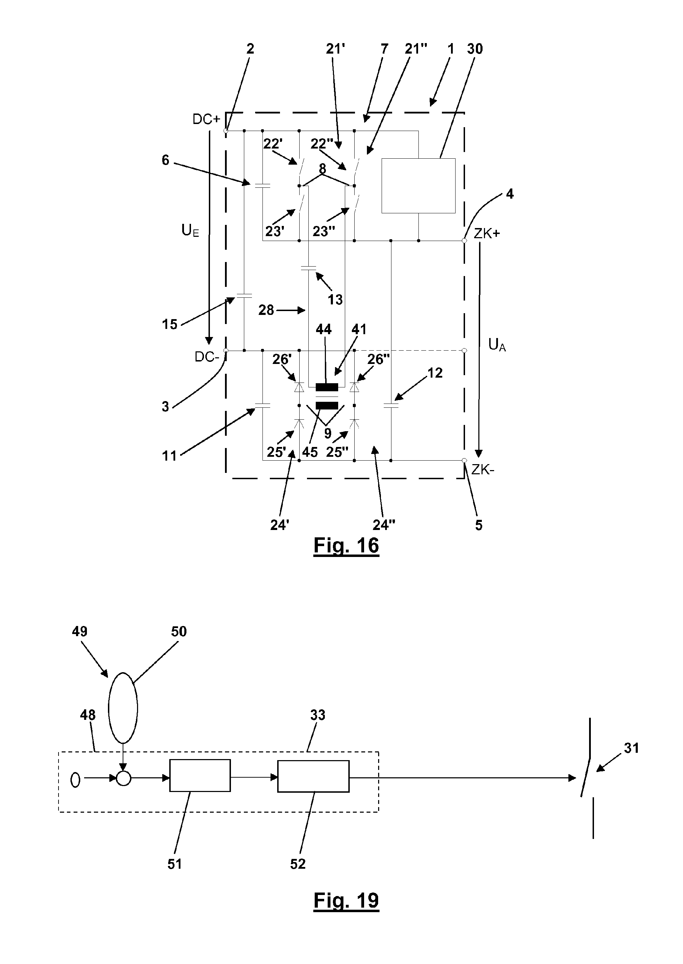

Bei der Ausführungsform des DC/DC-Wandlers 1 gemäß **Fig. 16** sind die beiden Halbbrücken 21" und 24" des Wechselrichters 7 und des Gleichrichters 10 nicht passiv aus Kapazitäten 42 und 43 bzw. 46 und 47, sondern wie die Halbbrücken 21' und 24' aus Schaltern 22" und 23" bzw. Dioden 25" und 26" aufgebaut. Zur Ausbildung des Schwingkreises 28 ist hier die Kapazität 13 gemeinsam mit der Primärwicklung 44 des Trafos 41 vorgesehen.

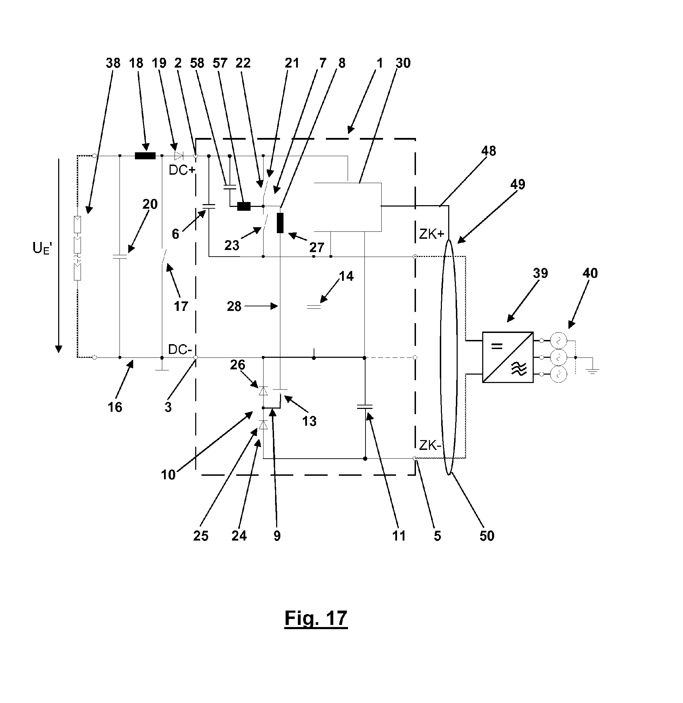

Der Grundaufbau des DC/DC-Wandlers 1 gemäß **Fig. 17**, der eingangsseitig an eine Photovoltaikanlage 38 und ausgangsseitig über einen Wechselrichter 39 an ein Wechselstromnetz 40 angeschlossen ist, entspricht Fig. 1. Eine Induktivität 57, die auf ihrer einen Seite an den Mittelpunkt der einzigen Halbbrücke 21 des Wechselrichters 7 angeschlossen ist und die wie die gemäß Fig. 4 über die Kapazität 55 an den Ausgangsanschluss 5 angebundenen Induktivität 29 dem ZVS dient ist, ist auf ihrer anderen Seite über eine Kapazität 58 an den Eingangsanschluss 2 angebunden. Weiterhin skizziert **Fig. 17** die Berücksichtigung eines Signals 48 eines Sensors 49 durch die Schaltung 30 des DC/DC-Wandlers 1. Der Sensor 49 erfasst als Maß für einen unkompensierten Erdstrom von dem DC/DC-Wandler 1 einen über dessen Ausgangsanschlüsse 4 und 5 fließenden Ableitstrom mit einem Summenstromwandler 50. Die Steuerlogik der Anlaufschaltung 30 verarbeitet das Signal 48 als Eingangssignal und steuert den oder die Schalter der Schaltung 30 in geeigneter Weise an, um den Erdstrom auf null zu reduzieren.

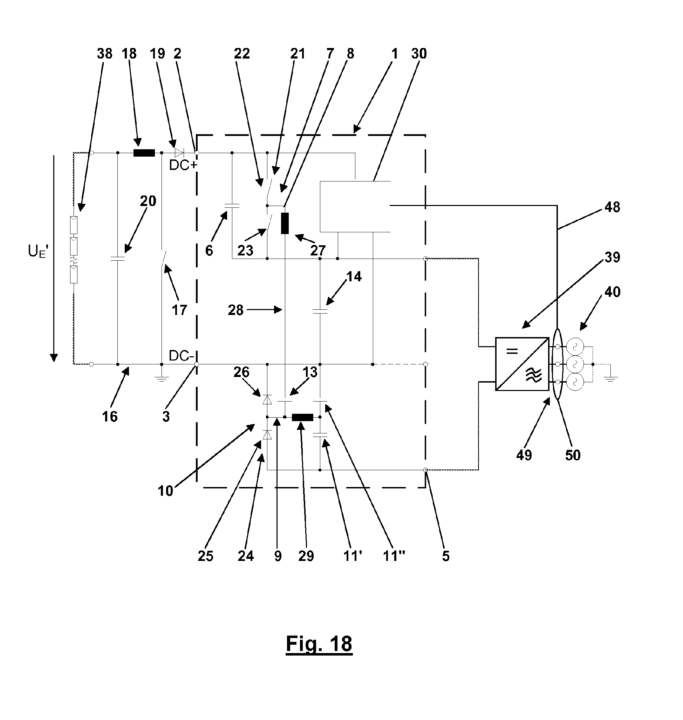

Während der Summenstromwandler 50 gemäß Fig. 17 den Ableitstrom direkt am Ausgang des DC/DC-Wandlers 1 erfasst, ist er gemäß **Fig. 18** am Ausgang des dem DC/DC-Wandler nachgeschalteten Wechselrichters 39 vorgesehen, wo er den Erdstrom von dem DC/DC-Wandler 1 ebenfalls erfasst, aber in an sich bekannter Weise auch noch zu anderen Überwachungsaufgaben eingesetzt werden kann.

**Fig. 19** skizziert eine Ausführungsform einer Steuerlogik 33 der Schaltung 30 gemäß Fig. 17 oder Fig. 18, um den von dem Sensor 49 erfassten Erdstrom auf null zu reduzieren. Das Signal 48 des Sensors 48 dient als Fehlersignal gegenüber dem Vorgabewert null. Ein Regler 51, der ein P+R- oder PI-Regler oder auch irgendein anderer geeigneter Regler sein kann, wirkt auf eine Pulsweitenmodulationseinrichtung 52 ein, um den Tastgrad, das heißt den Anteil der Zeiten, für die der Schalter 31 taktweise geschlossen wird, mit dem Ziel der Regelung des Signals 49 zu null einzustellen. Die Schaltung 30 wird so bei dem neuen DC/DC-Wandlers 1 als Hilfskonverter zur Erdstromkompensation eingesetzt. D. h. sie hat auch im laufenden Betrieb des DC/DC-Wandlers 1 eine Funktion und dient nicht nur dem sicheren Anlaufen seines Betriebs. So können auch zwei verschiedene Schaltungen 30 bei dem DC/DC-Wandler parallel nebeneinander vorgesehen werden, von denen die eine als reine Anlaufschaltung dient und z. B. gemäß Fig. 5 oder 6 aufgebaut ist und die andere an die Aufgabe als Hilfskonverter zur Erdstromkompensation angepasst ist und z. B. gemäß Fig. 5 oder 6 aufgebaut ist.

### BEZUGSZEICHENLISTE

- 1: DC/DC-Wandler
- 2: Eingangsanschluss
- 3: Einganganschluss
- 4: Ausgangsanschluss
- 5: Ausgangsanschluss
- 6: Kapazität
- 7: Wechselrichter
- 8: Ausgang
- 9: Eingang
- 10: Gleichrichter
- 11: Kapazität
- 12: Kapazität
- 13: Kapazität
- 14: Kapazität
- 15: Kapazität
- 16: Hochsetzsteller
- 17: Schalter
- 18: Induktivität
- 19: Diode
- 20: Kapazität
- 21: Halbbrücke
- 22: Schalter
- 23: Schalter
- 24: Halbbrücke
- 25: Diode
- 26: Diode
- 27: Induktivität
- 28: Resonanzkreis
- 29: Induktivität
- 30: Schaltung

- 31: Schalter
- 32: Widerstand
- 33: Steuerlogik
- 34: Induktivität
- 35: Diode
- 36: Schalter
- 37: Diode
- 38: Photovoltaikanlage
- 39: Wechselrichter
- 40: Wechselstromnetz
- 41: Transformator
- 42: Kapazität
- 43: Kapazität
- 44: Primärwicklung
- 45: Sekundärwicklung
- 46: Kapazität
- 47: Kapazität
- 48: Signal
- 49: Sensor
- 50: Summenstromwandler
- 51: Regler
- 52: Pulsweitenmodulationseinrichtung
- 53: Induktivität
- 54: Kapazität
- 55: Kapazität
- 56: Induktivität
- 57: Induktivität
- 58: Kapazität

## Patentansprüche

1. DC/DC-Wandler (1) mit zwei Eingangsanschlüssen (2, 3), an die eine Eingangsgleichspannung (U_{E}) anzulegen ist, mit zwei Ausgangsanschlüssen (4, 5), an denen eine Ausgangsgleichspannung (U_{A}) ausgegeben wird, mit einem Wechselrichter (7), der eine Gleichspannung in eine Wechselspannung an seinem Ausgang (8) umwandelt, und mit einem Gleichrichter (10), der eingangsseitig an den Ausgang (8) des Wechselrichters (7) angeschlossen und ausgangsseitig zwischen einen der Eingangsanschlüsse (3) und einen der Ausgangsanschlüsse (5) geschaltet ist und der eine an seinem Eingang (9) anliegende Wechselspannung in eine Gleichspannung zwischen dem einen der Eingangsanschlüsse (3) und dem einen der Ausgangsanschlüsse (5) umwandelt, wobei zwischen dem Ausgang (8) des Wechselrichters (7) und dem Eingang (9) des Gleichrichters (10) mindestens ein galvanisch trennendes Element angeordnet ist und wobei zwischen den beiden Ausgangsanschlüssen (4, 5) eine Kapazität wirksam ist, **dadurch gekennzeichnet, dass** der Wechselrichter (7) die Gleichspannung umwandelt, die über einer Kapazität (6) abfällt, welche zwischen dem jeweils anderen der Eingangsanschlüsse (2) und dem jeweils anderen der Ausgangsanschlüsse (4) wirksam ist.

2. DC/DC-Wandler (1) nach Anspruch 1, **dadurch gekennzeichnet, dass** das mindestens eine galvanisch trennende Element ein Kondensator (13) oder ein Transformator (41) ist.

3. DC/DC-Wandler (1) nach Anspruch 2, **dadurch gekennzeichnet, dass** zwischen dem Ausgang (8) des Wechselrichters (7) und dem Eingang (9) des Gleichrichters (10) mindestens ein Resonanzkreis (28) ausgebildet ist.

4. DC/DC-Wandler (1) nach Anspruch 3, **dadurch gekennzeichnet, dass** je Halbbrücke (21) des Wechselrichters (7) ein Resonanzkreis (28) zwischen dem Ausgang (8) des Wechselrichters (7) und dem Eingang (9) des Gleichrichters (10) ausgebildet ist.

5. DC/DC-Wandler (1) nach Anspruch 4, **dadurch gekennzeichnet, dass** alle Resonanzkreise (28) zwischen dem Ausgang (8) des Wechselrichters (7) und dem Eingang (9) des Gleichrichters (10) dieselbe Resonanzfrequenz aufweisen.

6. DC/DC-Wandler (1) nach mindestens einem der vorhergehenden Ansprüche, **dadurch gekennzeichnet, dass** die Wechselrichterausgänge über mindestens eine Induktivität (56, 53) und mindestens eine Kapazität (13, 54) miteinander verbunden sind.

7. DC/DC-Wandler (1) nach mindestens einem der vorhergehenden Ansprüche, **dadurch gekennzeichnet, dass** jeder Wechselrichterausgang und/oder jeder Gleichrichtereingang über eine Induktivität (29, 57) und eine Kapazität (55, 58) mit einem der Eingangsanschlüsse (2, 3) oder Ausgangsanschlüsse (4, 5) verbunden ist.

8. DC/DC-Wandler (1) nach mindestens einem der vorhergehenden Ansprüche, **dadurch gekennzeichnet, dass** die Ansteuerung von Schaltern (22, 23) des Wechselrichters (7) unabhängig von Schaltzuständen nachgeschalteter Konverter mit einem Tastgrad zwischen 30 % und 50 % erfolgt.

9. DC/DC-Wandler (1) nach mindestens einem der vorhergehenden Ansprüche, **dadurch gekennzeichnet, dass** der Kapazität (6), die zwischen den jeweils anderen der Eingangsanschlüsse (2) und den jeweils anderen der Ausgangsanschlüsse (4) geschaltet ist, mindestens eine Schaltung (30) parallel geschaltet ist, mit der die über der Kapazität (6) abfallende Spannung gezielt veränderbar ist.

10. DC/DC-Wandler (1) nach Anspruch 9, **dadurch gekennzeichnet, dass** die über der Kapazität (6), die zwischen den jeweils anderen der Eingangsanschlüsse (2) und den jeweils anderen der Ausgangsanschlüsse (4) geschaltet ist, abfallende Spannung mit der Schaltung (30) gegen null reduzierbar ist.

11. DC/DC-Wandler (1) nach Anspruch 9 oder 10, **dadurch gekennzeichnet, dass** die Schaltung (30) mindestens einen Schalter (31, 36) aufweist.

12. DC/DC-Wandler (1) nach Anspruch 11, **dadurch gekennzeichnet, dass** die Schaltung (30) eine Induktivität (34) und mindestens eine Diode (35, 37) aufweist.

13. DC/DC-Wandler (1) nach mindestens einem der vorhergehenden Ansprüche, **dadurch gekennzeichnet, dass** die Spannungen an beiden Eingangsanschlüsse (2, 3) gegenüber Erde dasselbe Vorzeichen aufweisen oder eine dieser Spannungen null ist.

14. DC/DC-Wandler (1) nach Anspruch 12, **dadurch gekennzeichnet, dass** in einem Betriebsmodus der Schaltung (30) das Signal (48) eines Sensors (49) der einen Erdstrom erfasst, auf eine Steuerlogik (33) der Anlaufschaltung (30) einwirkt.

15. DC/DC-Wandler (1) nach Anspruch 13 oder 14, **dadurch gekennzeichnet, dass** der Sensor (49) den einen Erdstrom in Form eines Ableitstrom über die Ausgangsanschlüsse (4, 5) des DC/DC-Wandlers (1) unmittelbar am Ausgang des DC/DC-Wandlers (1) oder am Ausgang eines dem DC/DC-Wandlers nachgeschalteten Wechselrichters (39) erfasst.
